(19) Europäisches Patentamt
European Patent Office
Office européen des brevets

(11) **EP 4 137 898 B1**

(12) **EUROPÄISCHE PATENTSCHRIFT**

(45) Veröffentlichungstag und Bekanntmachung des Hinweises auf die Patenterteilung:
**17.04.2024  Patentblatt 2024/16**

(21) Anmeldenummer: **21192416.2**

(22) Anmeldetag: **20.08.2021**

(51) Internationale Patentklassifikation (IPC):
**G05B 19/409** [(2006.01)]

(52) Gemeinsame Patentklassifikation (CPC):
**G05B 19/409;** G05B 2219/35442;
G05B 2219/35465; Y02P 90/02

(54) **BEDIENEINRICHTUNG FÜR EINE CNC-STEUERUNG**

CONTROL DEVICE FOR A CNC CONTROL SYSTEM

DISPOSITIF DE COMMANDE POUR UNE COMMANDE CNC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.02.2023  Patentblatt 2023/08**

(73) Patentinhaber: **Siemens Aktiengesellschaft 80333 München (DE)**

(72) Erfinder:
• **Bauschert, Matthias**
  **57567 Daaden (DE)**
• **Bretschneider, Jochen**
  **88696 Owingen (DE)**

(74) Vertreter: **Siemens Patent Attorneys Postfach 22 16 34 80506 München (DE)**

(56) Entgegenhaltungen:
EP-A1- 3 130 973          WO-A2-2018/049450
WO-A2-2019/023727

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Bedieneinrichtung für eine CNC-Steuerung zur Steuerung einer Werkzeugmaschine, wobei die Werkzeugmaschine mehrere Maschinenachsen umfasst, mittels der ein in eine Werkzeugaufnahme einer Werkzeugspindel eingesetztes Werkzeug relativ zu einem Werkstück verstellbar und/oder um eine Werkzeugspindelachse rotierbar ist.

Ferner betrifft die Erfindung ein Verfahren zum Betrieb einer mittels einer CNC-Steuerung, die eine derartige Bedieneinrichtung umfasst, gesteuerten Werkzeugmaschine.

Werkzeugmaschinen werden heutzutage mit Hilfe einer Steuereinrichtung, wie z.B. einer CNC-Steuerung, gesteuert. Dabei "steuert" die Steuereinrichtung anhand eines Teileprogramms die Bewegungen von Maschinenelementen und damit die Bewegungen eines Werkzeuges, welches beispielsweise über eine Werkzeughaltevorrichtung in die Maschine eingebracht wird, relativ zu einem Werkstück, welches ebenfalls in die Maschine eingebracht wird. Dabei ist dem Fachmann klar, dass es sich bei dem Begriff "steuern" um den üblichen Sprachgebrauch und nicht um "steuern" im Sinne der Regelungstechnik handelt. "Steuern" meint hier vor allem die Vorgabe von Lagesollwerten für die Lageregelung von Achsen, wohinter sich Regelungsvorgänge im Sinne der Regelungstechnik verbergen.

Das Teileprogramm setzt sich dabei zumindest überwiegend aus Steuerbefehlen zusammen, die von der Steuereinrichtung eingelesen und interpretiert werden. Entsprechend den Steuerbefehlen steuert die Steuereinrichtung die Bewegungen der Maschinenelemente der Werkzeugmaschine und damit die Bewegung des Werkzeugs relativ zu dem Werkstück.

Das Teileprogramm kann man prinzipiell manuell an einem Editor direkt an der Maschine oder an einem externen Rechner erzeugen.

Zur Erstellung eines Teileprogramms werden in der Regel von einem CAM-System (Computer Aided Manufacturing) vorzugsweise in einem standardisierten Datenformat Bewegungsinformationen über durchzuführende Bewegungen des Werkzeugs erzeugt und von einem nachgeschalteten Postprozessor eingelesen. Der Postprozessor erzeugt anhand der vom CAM-System erzeugten Bewegungsinformationen, den Kinematik- und Maschinendaten der Werkzeugmaschine sowie dem Befehlssatz der CNC-Steuerung und dem Befehlssatz der PLC-Steuerung, ein für die jeweilige konkrete Werkzeugmaschine auf denen der Bearbeitungsvorgang stattfinden soll angepasstes Teileprogramm in Form von auf die konkrete Steuereinrichtung der Werkzeugmaschine angepassten Steuerbefehlen. Solchermaßen werden vom Postprozessor die vom CAM-System vorzugsweise in einem standardisierten Datenformat erzeugten Bewegungsinformationen in Steuerbefehle, die von der Steuereinrichtung eingelesen werden können und auf die jeweilige Steuereinrichtung angepasst sind, umgesetzt.

Der Postprozessor berücksichtigt dabei neben dem konkret verfügbaren CNC-Befehlssatz die konkreten maschinenspezifischen kinematischen Gegebenheiten der Werkzeugmaschine, wie z.B. Kinematik, geometrische Größenverhältnisse, maximale Verfahrbereiche der Antriebsachsen und Maximalgeschwindigkeiten der Maschinenelemente. Diese Daten liegen in Form von Maschinendaten vor. Weiterhin werden vom Postprozessor bei der Erzeugung der Steuerbefehle maschinenspezifische PLC-Funktionalitäten (Programmable Logic Control), wie z.B. Schmierung, Werkzeugwechsel, Türverriegelung etc. berücksichtigt, wobei die konkret verfügbaren PLC-Funktionalitäten in Form von PLC-Befehlssätzen dem Postprozessor zur Verfügung stehen.

Die Bedienung von Werkzeugmaschinen erfolgt über Bedieneinrichtungen wie einem HMI (Human Machine Interface) der CNC-Steuerung, einer mit der CNC-Steuerung verbindbaren Maschinensteuertafel (MCP bzw. Machine Control Panel) oder mittels Handbediengeräten. Bedieneinrichtungen für Werkzeugmaschinen weisen mindestens einen, oft jedoch mehrere, Override- (OVR-) Stellelemente (nachfolgend auch kurz "Override" genannt) zur Beeinflussung der Stellgrößen Vorschubgeschwindigkeit (kurz: Vorschub) der Vorschubachsen oder Spindeldrehzahl der Hauptspindel auf.

Für den Vorschub kann dabei zusätzlich zwischen einem Arbeitsvorschub, bei dem sich das Werkzeug in Eingriff mit dem Werkstück befindet, und einem Eilgang, bei dem sich das Werkzeug nicht in Eingriff befindet, unterschieden werden.

Bekannte Bedieneinrichtungen für CNC-Steuerungen weisen einen einzigen Vorschub-Override auf, mit dem sowohl der Arbeitsvorschub (die Vorschubgeschwindigkeit für den Anwendungsfall, in dem sich das Werkzeug in Eingriff mit dem Werkstück befindet) als auch der Eilgang (die Vorschub- bzw. Eilganggeschwindigkeit für den Anwendungsfall, in dem sich das Werkzeug nicht in Eingriff mit dem Werkstück befindet) getrennt voneinander einstellbar ist, je nachdem, welcher Anwendungsfall bei einer Betätigung des Vorschub-Overrides gerade vorliegt. Es sind aber auch Bedieneinrichtungen bekannt, die separate Vorschub-Overrides für den Arbeitsvorschub und den Eilgang verwenden.

In der Regel wird mittels des Stellelements die Stellgröße nicht absolut eingestellt (z.B. die Spindeldrehzahl direkt in U/min bzw. rpm), sondern prozentual bezüglich einem programmierten Wert verändert, z.B. in einem Wertebereich von 0% bis 120% des programmierten Wertes.

In der Regel sind Override-Steller heute als Drehsteller mit festen Anschlägen ausgebildet, die sich mittels eines Drehknopfes in einem bestimmten Winkelbereich, z.B. zwischen 0° und 270°, durch manuelle Betätigung eines Drehknopfes einstellen lassen. Es sind jedoch auch Override-Steller in Form von endlos drehbaren Drehstellern (Inkrementalgeber) bekannt. Unter Drehstellern werden im Zusammenhang mit der Erfindung nicht nur "reine" Drehsteller verstanden, die ausschließlich die manuelle Betätigung eines Drehknopfes erlauben, sondern auch solche Bedienelemente, die neben dem Drehknopf noch wenigstens einen Tastschalter (auch als Dreh-Drück-Steller bezeichnet) oder die Funktion eines Steuerhebels (Joysticks) etc. mit umfassen.

Häufig ändert sich der Wert der Stellgröße nicht linear mit der Override-Einstellung (also dem Drehwinkel des Drehknopfes), sondern in diskreten Stufen. So können z.B. im Falle des Spindeloverrides (auch als SPINDLE-OVR bezeichnet) 16 unterschiedlichen Winkelbereichen eines Drehstellers je einer Spindelgeschwindigkeit zugeordnet werden. Dies geschieht z.B. für Einstellungen zwischen 50% und 120% gleichmäßig aufgeteilt in 5% Schritten.

Es wird angemerkt, dass unter dem Begriff "Drehwinkel" sowohl der absolute Winkel verstanden werden kann, den der Drehsteller aktuell einnimmt (z.B. 0° oder 180°), aber auch der Winkelbereich, der bei einer bestimmten Bedienhandlung überstrichen wird (z.B. 20° bei einer Veränderung von 180° auf 200°). Die jeweilige Bedeutung ergibt sich aus dem Kontext.

Im Falle des Vorschuboverrides (auch als FEED-OVR bezeichnet) wird z.B. der Winkelbereich des Drehstellers von 0° bis 270° in 23 "Schalterstellungen", d.h. Winkelbereiche von jeweils ca. 12° (angelehnt an eine nichtlineare stufenförmige Kennlinie), der prozentualen Vorschubbeeinflussung wie folgt zugeordnet:

- Winkelbereich 1 = 0%
- Winkelbereich 2 = 1%
- Winkelbereich 3 = 2%
- Winkelbereich 4 = 4%
- Winkelbereich 5 = 6%
- Winkelbereich 6 = 8%
- Winkelbereich 7 = 10%
- Danach (Winkelbereiche 8 bis 23) in 10% Schritten bis 120%

Die nichtlineare Verteilung im Falle des Vorschuboverrides erlaubt dem Bediener eine feinere Abstufung im niedrigen Geschwindigkeitsbereich und ist der endlichen Anzahl an Drehschalterstellungen geschuldet, die bei einer linearen Verteilung der prozentualen Veränderungen zu "großen Sprüngen" im niedrigen Geschwindigkeitsbereich führen würde.

Insbesondere mit digitalen Inkrementalgebern lassen sich jedoch auch wesentlich feinere Abstufungen und damit für den Benutzer als "stufenlos" erscheinende Kennlinien realisieren. Streng genommen wird bei Werkzeugmaschinen unter der Vorschubgeschwindigkeit die Geschwindigkeit verstanden, mit der sich das Werkzeug relativ zu dem Werkstück zur Bearbeitung des Werkstücks "durch das Werkstück" bewegt, das Werkzeug sich also "in Eingriff" befindet. Mittels des Vorschuboverrides werden in der Regel jedoch analog auch Bewegungen der Maschinenachsen beeinflusst, bei denen sich das Werkzeug nicht in Eingriff befindet, z.B. sogenannte Eilgang-Bewegungen. Im Rahmen dieser Patentanmeldungen sind bei den Begriffen Vorschuboverride bzw. Vorschubgeschwindigkeit ausdrücklich auch solche Bewegungen mit umfasst, bei denen sich das Werkzeug nicht in Eingriff befindet, wie z.B. Eilgang-Bewegungen. Dokumente WO 2018/049450 A2, EP 3 130 973 A1 und WO 2019/023727 A2 repräsentieren ebenfalls den Stand der Technik.

Nachteilig bei heutigen Drehstellern zur Beeinflussung der Vorschubgeschwindigkeit oder der Spindeldrehzahl von Werkzeugmaschinen ist deren fehlende Flexibilität hinsichtlich der Anpassung an die Belange des individuellen Benutzers. Eine Aufgabe der vorliegenden Erfindung ist es daher, bei Drehstellern zur Beeinflussung der Vorschubgeschwindigkeit oder der Spindeldrehzahl von Werkzeugmaschinen die Flexibilität hinsichtlich der Anpassung an die Belange des individuellen Benutzers zu verbessern.

Diese Aufgabe wird gelöst durch eine Bedieneinrichtung für eine CNC-Steuerung zur Steuerung einer Werkzeugmaschine mit den in Patentanspruch 1 angegebenen Merkmalen, d.h. eine Bedieneinrichtung für eine CNC-Steuerung zur Steuerung einer Werkzeugmaschine, wobei die Werkzeugmaschine mehrere Maschinenachsen umfasst, mittels der ein in eine Werkzeugaufnahme einer Werkzeugspindel eingesetztes Werkzeug relativ zu einem Werkstück verstellbar und/oder um eine Werkzeugspindelachse rotierbar ist, wobei die Bedieneinrichtung wenigstens einen manuell von einem Bediener der Bedieneinrichtung bedienbaren, endlos drehbaren Drehsteller aufweist, durch den eine Vorschubgeschwindigkeit, mit der sich das Werkzeug relativ zu dem Werkstück bewegt, und/oder eine Spindeldrehzahl manuell durch Drehen an einem Drehknopf des Drehstellers durch den Bediener einstellbar ist, wobei die Bedieneinrichtung eine grafische Bedienerschnittstelle umfasst, mittels der die Wirkung einer mittels des Drehstellers durchgeführten Bedienhandlung auf die Vorschubgeschwindigkeit und/oder die Spindeldrehzahl einstellbar ist.

Ferner wird die Aufgabe gelöst durch ein Verfahren mit den in Patentanspruch 14 angegebenen Verfahrensschritten, das heißt ein Verfahren zum Betrieb einer mittels einer CNC-Steuerung, die eine Bedieneinrichtung umfasst, gesteuerten Werkzeugmaschine, wobei die Werkzeugmaschine mehrere Maschinenachsen umfasst, mittels der ein in eine Werkzeugaufnahme einer Werkzeugspindel eingesetztes Werkzeug relativ zu einem Werkstück verstellt wird und/oder um eine Werkzeugspindelachse rotiert, wobei die Bedieneinrichtung wenigstens einen manuell von einem Bediener der Bedieneinrichtung bedienbaren, endlos drehbaren Drehsteller aufweist, durch den eine Vorschubgeschwindigkeit, mit der sich das Werkzeug relativ zu dem Werkstück bewegt, und/oder eine Spindeldrehzahl manuell durch Drehen an einem Drehknopf des Drehstellers durch den Bediener eingestellt wird, wobei die Bedieneinrichtung eine grafische Bedienerschnittstelle umfasst, mittels der die Wirkung (Bedienfunktion) einer mittels des Drehstellers durchgeführten Bedienhandlung (Drehen des Drehknopfes um einen bestimmten Winkel, ggf. innerhalb einer bestimmten Zeit) auf die Vorschubgeschwindigkeit und/oder die Spindeldrehzahl eingestellt wird, wobei ein auf der CNC-Steuerung bereitgestelltes Programm gestartet wird, welches die Bewegung des Werkzeugs relativ zu dem Werkstück vorgibt, wobei eine mittels des Drehstellers durchgeführte Bedienhandlung die Vorschubgeschwindigkeit und/oder die Spindeldrehzahl gemäß der Einstellung ändert.

Die Erfindung bietet den Vorteil, dass der Bediener die Wirkung einer mittels des Drehstellers durchgeführten Bedienhandlung auf die Vorschubgeschwindigkeit und/oder die Spindeldrehzahl individuell nach seinen Bedürfnissen und Vorlieben einstellen kann. Insbesondere hat sich gezeigt, dass für verschiedene mit der Werkzeugmaschine durchgeführte Werkstück-Bearbeitungen unterschiedliche Wirkungen einer bestimmten Bedienhandlung optimal sind. Beispielsweise kann bei einer bestimmten Bearbeitung der Wertebereich zwischen 0% und 20% der mittels des OVR eingestellten Geschwindigkeit oder Drehzahl entscheidend sein, wohingegen dieser Wertebereich bei einer anderen Bearbeitung lediglich eine untergeordnete Rolle spielt. Im ersten Fall kann so dem genannten Wertebereich ein verhältnismäßig großer Winkelbereich des Drehstellers zugeordnet werden, so dass in diesem Bereich eine gute "Feineinstellung" gewährleistet werden kann. Insgesamt wird durch die Erfindung mehr Flexibilität im Umgang mit den Override-Stellern erreicht.

Eine Ausführungsform der Erfindung sieht vor, dass durch Betätigung des Drehstellers ein Drehwinkel einstellbar ist und zum Einstellen der Wirkung der Bedienhandlung ein Zusammenhang zwischen dem Drehwinkel und einem prozentualen Einstellwert (nachfolgend auch als "OVR-Wert" bezeichnet) vorgebbar ist, wobei der prozentuale Einstellwert ein Verhältnis zwischen einer programmierten Vorschubgeschwindigkeit und/oder einer programmierten Spindeldrehzahl und einer tatsächlichen Vorschubgeschwindigkeit und/oder einer tatsächlichen Spindeldrehzahl bestimmt.

Analog sieht eine Ausführungsform eines erfindungsgemäßen Verfahrens vor, dass durch Betätigung des Drehstellers ein Drehwinkel des Drehknopfes eingestellt wird, wobei zum Einstellen der Wirkung der Bedienhandlung ein Zusammenhang zwischen dem Drehwinkel und einem prozentualen Einstellwert vorgegeben wird, wobei mittels des prozentualen Einstellwertes ein Verhältnis zwischen einer programmierten Vorschubgeschwindigkeit und/oder einer programmierten Spindeldrehzahl und einer tatsächlichen Vorschubgeschwindigkeit und/oder einer tatsächlichen Spindeldrehzahl bestimmt wird.

Beträgt beispielsweise der programmierte Wert der Spindeldrehzahl 1000 U/min und der prozentuale Einstellwert des Drehstellers beträgt 120%, so ergibt sich eine tatsächliche Spindeldrehzahl von 1000 U/min x 120/100 = 1200 U/min.

Die Erfindung erlaubt es, eine altbekannte, "klassische" Wirkungsweise eines zuvor verwendeten Drehstellers nachzubilden. So kann der Drehsteller so "programmiert" werden, dass er in einem Winkelbereich zwischen 0° und 270° 16 bzw. 23 Stufen implementiert und für Drehwinkel < 0° der kleinste prozentuale Einstellwert (0 %) und für Drehwinkel > 270° der größte prozentuale Einstellwert (120 %) beibehalten wird.

So kann bei Bedarf (für bestimmte Anwendungen) das Verhalten eines vorbekannten Drehstellers nachgebildet werden, welches dem Bediener vertraut ist.

Darüber hinaus erlaubt es die Erfindung, einen nahezu beliebigen Zusammenhang zwischen Drehwinkel und prozentualem Einstellwert festzulegen (zu "programmieren"). Insbesondere kann so eine zumindest näherungsweise "glatte" (stetige) Kennlinie festgelegt werden.

Eine Ausführungsform der Erfindung sieht vor, dass durch wenigstens eine vorbestimmte Bedienhandlung eine vorbestimmte Bedienfunktion ausführbar ist und ein Zusammenhang zwischen der Bedienfunktion und dem prozentualen Einstellwert vorgebbar ist.

Analog sieht eine Ausführungsform eines erfindungsgemäßen Verfahrens vor, dass durch wenigstens eine vorbestimmte Bedienhandlung, insbesondere eine Bediensequenz, eine vorbestimmte Bedienfunktion ausgeführt wird, wobei ein Zusammenhang zwischen der Bedienfunktion und dem prozentualen Einstellwert vorgegeben wird.

Eine Bedienhandlung kann dabei aus einer einzelnen Handlung bestehen, z.B. einmaliges kurzes schnelles Drehen des Drehknopfes des Drehstellers im Uhrzeigersinn. Eine Bedienhandlung kann jedoch auch mehrere, insbesondere in kurzem zeitlichen Abstand nacheinander durchgeführte Handlungen, eine sog. Bediensequenz, umfassen. Eine Bediensequenz kann ferner neben der - insbesondere mehrmaligen - Betätigung des Drehknopfes auch eine Betätigung wenigstens eines weiteren Bedienelements, z.B. das Drücken eines Tasters, umfassen.

Eine Ausführungsform der Erfindung sieht daher vor, dass eine Bediensequenz ausführbar ist, wobei ein Zusammenhang zwischen der Bediensequenz und dem OVR-Wert bzw. der Vorschubgeschwindigkeit bzw. der Spindeldrehzahl vorgebbar ist.

Unter einer Bediensequenz wird dabei eine bestimmte, vordefinierte markante Handlung verstanden, die insbesondere durch mehrmalige Betätigung des Drehknopfes des Drehstellers innerhalb eines bestimmten Zeitraums ausgelöst wird.

Beispiele für Bedienhandlungen bzw. Bediensequenzen sind:

- Einmaliges schnelles, kurzes ("ruckartiges") Drehen des Drehstellers im Uhrzeigersinn;

- Einmaliges schnelles, kurzes ("ruckartiges") Drehen des Drehstellers entgegen dem Uhrzeigersinn;

- Einmaliges schnelles, kurzes ("ruckartiges") Drehen des Drehstellers im Uhrzeigersinn und unmittelbar daran anschließendes einmaliges schnelles, kurzes ("ruckartiges") Drehen des Drehstellers entgegen dem Uhrzeigersinn.

Die Definition und Verwendung von Bedienhandlungen bzw. Bediensequenzen hat den Vorteil, dass damit eine Unterbrechung des starren Zusammenhangs zwischen Stellwinkel des Drehstellers und dem damit eingestellten OVR-Wert möglich ist. Z.B. lassen sich durch kurzes schnelles Drehen in eine bestimmte Richtung Sprünge des OVR-Wertes auslösen. Der Drehsteller muss somit nicht um den entsprechenden Winkelbereich gedreht werden, um den "Zielwert" zu erreichen.

Eine Ausführungsform der Erfindung sieht vor, dass in einem Auswahl-Menü eine Anzahl an Kennlinien vorgegeben ist, von denen eine durch den Bediener auswählbar ist, wobei die ausgewählte Kennlinie den Zusammenhang zwischen dem Stellwinkel des Drehstellers und dem prozentualen Einstellwert bestimmt.

Analog sieht eine Ausführungsform eines erfindungsgemäßen Verfahrens vor, dass in einem Auswahl-Menü eine Anzahl an Kennlinien vorgegeben wird, von denen eine durch den Bediener ausgewählt wird, wobei die ausgewählte Kennlinie den Zusammenhang zwischen dem Drehwinkel und dem prozentualen Einstellwert bestimmt.

Für viele Anwendungen kann jeweils eine bestimmte Kennlinie besonders günstig sein, z.B. eine Kennlinie, die eine "Feineinstellung" im unteren Winkelbereich des Drehstellers oder eine Kennlinie, die eine "Feineinstellung" im oberen Winkelbereich des Drehstellers erlaubt. So kann dem Benutzer auf einfache und schnelle Weise eine gute Anpassung an seinen speziellen Bedarf ermöglicht werden, ohne dass er sich dafür selbst eine geeignete Kennlinie definieren müsste.

Eine Ausführungsform der Erfindung sieht vor, dass die Kennlinie - insbesondere mittels grafischer Hilfsmittel - individuell konfigurierbar ist. Eine individuelle Konfiguration erlaubt die größtmögliche Optimierung für die spezielle Anwendung des jeweiligen Benutzers. Eine Einstellung mittels grafischer Hilfsmittel ist zudem sehr bedienerfreundlich.

Analog sieht eine Ausführungsform eines erfindungsgemäßen Verfahrens vor, dass eine Kennlinie vorgegeben wird, die den Zusammenhang zwischen dem Drehwinkel und dem prozentualen Einstellwert bestimmt. Dabei wird die Kennlinie gemäß einer bevorzugten Ausführungsform individuell konfiguriert, insbesondere mittels grafischer Hilfsmittel.

Die grafischen Hilfsmittel können z.B. ein Display und ein Zeigergerät als Eingabemittel umfassen. So kann die Kennlinie z.B. an einem bestimmten Punkt mit einem Mauszeiger angewählt und in diesem Bereich auf dem Display gezogen werden, wobei vorteilhaft bei dieser Aktion ein "glatter" (geschlossener) Verlauf der Kennlinie erhalten bleibt. Ähnliche Funktionen sind von Zeichenprogrammen hinlänglich bekannt.

Eine Ausführungsform der Erfindung sieht vor, dass die Kennlinie wenigstens abschnittweise einen glatten und/oder wenigstens abschnittweise einen stufenförmigen Verlauf aufweist. Die Möglichkeit des stufenförmigen Verlaufs ermöglicht die Einstellung von Kennlinien, die der bisherigen Gewohnheit des Benutzers entsprechen. Ein glatter (zumindest weitgehend "stufenloser") Verlauf vermeidet Sprünge und ermöglicht daher eine feinere Einstellung.

Neben der Einstellung der Kennlinie durch grafische Hilfsmittel sind auch andere Möglichkeiten gegeben. Beispielsweise könnte der Verlauf der Kennlinie auch durch einen mathematischen Term bestimmt sein, bei dem man den Verlauf durch Vorgabe von Parametern ändern kann, um nur eine von vielen weiteren Möglichkeiten zu nennen.

Eine Ausführungsform der Erfindung sieht vor, dass die Kennlinie bei Verwendung eines Drehstellers einen Drehwinkelbereich größer 360° und/oder negative Drehwinkel abdeckt, wobei sich insbesondere die Rotations-Richtung der Spindel oder die Bewegungsrichtung des Werkzeugs bei negativen Drehwinkeln gegenüber positiven Drehwinkeln umkehrt (bei Vorschub bedeutet dies "Rückwärtsfahren").

Analog sieht eine Ausführungsform eines erfindungsgemäßen Verfahrens vor, dass die Kennlinie einen Drehwinkelbereich größer 360° und/oder negative Drehwinkel abdeckt, wobei negativen Drehwinkeln negative prozentuale Einstellwerte zugeordnet werden und wobei sich die Rotations-Richtung der Spindel oder die Bewegungsrichtung des Werkzeugs bei negativen Drehwinkeln gegenüber positiven Drehwinkeln umkehrt.

Ein Drehwinkelbereich größer 360°, der die Zuordnung unterschiedlicher OVR-Werte auf einen Winkelbereich des Drehstellers von mehr als 360°, insbesondere auf ein Vielfaches von 360° erstreckt, erlaubt eine noch genauere Justierung des OVR-Wertes, die bei bestimmten Anwendungen besonders vorteilhaft ist. Beispielsweise kann der Wertebereich des OVR-Wertes von 0% bis 120% auf zwei vollständige Umdrehungen des Drehstellers, also auf einen Winkelbereich von 720° abgebildet werden.

So kann z.B. bei einem Drehsteller mit 256 Stufen (Inkrementen bzw. kurz "Ink") bei einer Ausweitung des Drehwinkelbereiches auf 10 vollständige Umdrehungen die Auflösung der Geschwindigkeitsänderung um den Faktor 10 gegenüber einem herkömmlichen Override-Steller mit nur einer möglichen Umdrehung geändert werden. Die Auflösung des OVR-Wertes beträgt dann nur ca. 0,05 %/Ink, wie nachfolgende Rechnung zeigt:

$$\Delta \; OVR \; = \; 120\% \; / \; (256*10) \; Ink \; = \; 0,0469 \; \%/Ink$$

Beträgt die typische Bearbeitungsgeschwindigkeit der Achse, die per OVR beeinflusst werden kann, beispielsweise 10m/min, so ist eine Auflösung der Geschwindigkeit $\Delta$ v möglich von:

$$\Delta \; v \; = \; 10 \; m/min \; / \; (256*10) \; Ink \; = \; 1/256 \; m/min/Ink$$

Damit ist eine sehr feine Einstellung der aktuellen Vorschubgeschwindigkeit oder der Spindeldrehzahl möglich, die beispielsweise benötigt wird, um Ratterschwingungen durch den Bediener effizient durch feinfühlige Variation eben des Vorschubs oder der Spindeldrehzahl zu unterdrücken.

Weiterhin kann die Möglichkeit einer schnellen und einfachen Dreh- bzw. Bewegungsrichtungsumkehr bei vielen Anwendungen hilfreich und vorteilhaft sein. So kann z.B. ein Werkzeug einfach und schnell entgegen der Vorschubrichtung von dem Werkstück entfernt werden. Dies ist insbesondere dann der Fall, wenn negativen Drehwinkeln (z.B. -20° bzw. beginnend bei 0°, Linksdrehung um 20°) negative OVR-Werte (z.B. -5%) zugeordnet werden.

Eine Ausführungsform der Erfindung sieht vor, dass unterschiedlichen Winkelbereichen unterschiedliche Bedienfunktionen zuordenbar sind.

Analog sieht eine Ausführungsform eines erfindungsgemäßen Verfahrens vor, dass unterschiedlichen Winkelbereichen unterschiedliche Bedienfunktionen zugeordnet werden.

Beispielsweise können zunehmende Drehwinkel des Drehstellers in einem Drehwinkelbereich zwischen 0° und 360° zu einer Zunahme der Vorschubgeschwindigkeit und zunehmende Drehwinkel des Drehstellers in einem Winkelbereich zwischen 360° und 720° zu einer Abnahme der Vorschubgeschwindigkeit führen. So können durch Drehen des Drehstellers in ein und derselben Richtung unterschiedliche Bedienfunktionen (Erhöhung des OVR-Wertes, Reduzierung des OVR-Wertes) ausgeführt werden.

Prinzipiell können bestimmten Drehwinkeln des Drehstellers beliebige OVR-Werte zugeordnet werden. So können auch Kennlinien mit einem oder mehreren Nulldurchgängen hinsichtlich der OVR-Werte realisiert werden. Prinzipiell können diese Nulldurchgänge auch im Bereich positiver Drehwinkel liegen, so dass auch positiven Drehwinkeln negative OVR-Werte zugeordnet werden können.

Ebenso ist es möglich, dass bestimmten Drehwinkelbereichen, insbesondere negativen Drehwinkeln, z.B. Drehwinkeln in einem Drehwinkelbereich zwischen 0° und -360°, negative prozentuale Einstellwerte zuordenbar sind. Vorzugsweise kehrt sich dabei die Rotations-Richtung der Spindel oder die Bewegungsrichtung des Werkzeugs in diesen Drehwinkelbereichen bzw. bei diesen Drehwinkeln gegenüber anderen Drehwinkelbereichen bzw. anderen Drehwinkeln um.

Eine Ausführungsform eines erfindungsgemäßen Verfahrens sieht vor, bestimmten Drehwinkelbereichen, insbesondere negativen Drehwinkeln, negative prozentuale Einstellwerte zugeordnet werden, wobei sich insbesondere die Rotations-Richtung der Spindel oder die Bewegungsrichtung des Werkzeugs in diesen Drehwinkelbereichen bzw. bei diesen Drehwinkeln gegenüber anderen Drehwinkelbereichen bzw. anderen Drehwinkeln (denen positive prozentuale Einstellwerte zugeordnet sind) umkehrt.

Eine Ausführungsform der Erfindung sieht vor, dass unterschiedlichen Bediensequenzen unterschiedliche Bedienfunktionen zuordenbar sind.

Analog sieht eine Ausführungsform eines erfindungsgemäßen Verfahrens vor, dass unterschiedlichen Bedienhandlungen bzw. Bediensequenzen unterschiedliche Bedienfunktionen zugeordnet werden.

Wenn der Benutzer selbst festlegen kann, welche Bedienfunktion er für welche Bediensequenz vorsieht, wird ein hohes Maß an Individualisierung bei der Bedienung erreicht.

Insbesondere erlaubt es diese Möglichkeit dem Bediener, individuell besonders einprägsame oder einfach auszuführende Bediensequenzen besonders oft verwendeten Bedienfunktionen zuzuordnen. So kann die Bedienbarkeit für den individuellen Bediener weiter verbessert werden.

Eine Ausführungsform der Erfindung sieht vor, dass Bediensequenzen individuell gestaltbar und/oder lernbar sind.

Analog sieht eine Ausführungsform eines erfindungsgemäßen Verfahrens vor, dass Bedienhandlungen bzw. Bediensequenzen individuell gestaltet und/oder gelernt werden.

Diese Funktion erlaubt es dem Bediener, seine eigenen Bediensequenzen zu definieren. So können Bediensequenzen z.B. aufgezeichnet und gelernt werden, was dem individuellen Gestaltungsspielraum bei der Bedienung mittels eines Drehstellers nahezu keine Grenzen setzt.

Eine Ausführungsform der Erfindung sieht vor, dass die Wirkung der mittels des Drehsteller durchgeführten Bedienhandlung auf die Vorschubgeschwindigkeit und/oder die Spindeldrehzahl abhängig von einer von der Werkzeugmaschine ausführbaren Funktion vorgebbar ist.

Analog sieht eine Ausführungsform eines erfindungsgemäßen Verfahrens vor, dass für unterschiedliche von der Werkzeugmaschine ausführbare Funktionen unterschiedliche Wirkungen der mittels des Drehsteller durchgeführten Bedienhandlungen auf die Vorschubgeschwindigkeit und/oder die Spindeldrehzahl vorgegeben werden.

Zu den von (bzw. mittels) der Werkzeugmaschine ausführbaren Funktionen gehören insbesondere die mit der Werkzeugmaschine ausführbaren Bearbeitungsarten. So erlauben insbesondere Universal-Werkzeugmaschinen die Ausführung unterschiedlicher Bearbeitungen, z.B. Drehen, Fräsen und Bohren, mit ein und derselben Maschine.

Weiterhin wird - wie eingangs bereits erwähnt - unterschieden zwischen Bearbeitungs-Funktionen (Bearbeitungsarten), bei denen sich das Werkzeug in Eingriff befindet, und Bewegungs-Funktionen, bei denen Werkzeug und Werkstück voneinander beabstandet sind, z.B. Eilgang-Bewegungen.

Die Erfindung sieht vor, dass für unterschiedliche Funktionen der Maschine unterschiedliche Wirkungen (Bedienfunktionen) einer bestimmten, mittels des Vorschuboverrides oder des Spineloverrides durchgeführten Bedienhandlung eingestellt werden können.

So kann beispielsweise für die Bearbeitungsart "Drehen" eine andere Vorschuboverride-Kennlinie eingestellt und bei dieser Bearbeitungsart automatisch wirksam werden als z.B. bei der Bearbeitungsart "Fräsen". Weiterhin kann auch für die Funktion "Bewegung im Eilgang" eine andere Vorschuboverride-Kennlinie eingestellt und bei dieser Bearbeitungsart automatisch wirksam werden als z.B. bei einer für eine bestimmte Bearbeitungsart eingestellten Kennlinie.

Insbesondere erkennt die CNC-Steuerung, welche Bearbeitungsart mittels der betreffenden Werkzeugmaschine gerade ausgeführt wird, z.B. anhand des aktuell ausgeführten Befehls aus dem Teileprogramm, wie z.B. einem "G0"-Befehl für einen Eilgang oder einem aufgerufenen Fräszyklus, und stellt den für diese Funktion vorgegebenen Zusammenhang zwischen der mittels des betreffenden Drehstellers ausgeführten Bedienhandlung und der damit erzielten Wirkung (Bedienfunktion) her. Selbstverständlich ist eine derartige Zuordnung nicht nur für unterschiedlichen Kennlinien möglich, sondern allgemein für die mit dem jeweiligen Drehsteller ausführbaren Bedienhandlungen bzw. Bediensequenzen und die damit ausgelösten Bedienfunktionen.

Die Möglichkeit der Anpassung der Wirkung der mittels der Drehsteller ausgeführten Bedienhandlungen an unterschiedliche Funktionen der Werkzeugmaschine ermöglicht eine noch bessere Anpassung dieser Bedienelemente an den jeweiligen Bedarfsfall. So kann für eine bestimmte mittels der Werkzeugmaschine durchgeführte Bearbeitung eine im oberen und unteren Vorschubgeschwindigkeitsbereich sehr flache Kennlinie und für andere Funktionen, z.B. Bewegung im Eilgang, z.B. eine lineare Kennlinie vorgegeben werden.

Auch kann beispielsweise der Bedienhandlung "kurzes schnelles Rechtsdrehen" des Vorschuboverrides während eines Bearbeitungs-Vorgangs die Bedienfunktion "Sprung um 10%" und für dieselbe Bedienhandlung während einer Eilgangsbewegung die Bedienfunktion "Sprung um 20%" zugeordnet werden.

Die Erfindung wird nachfolgend anhand von Ausführungsbeispielen exemplarisch näher beschrieben und erläutert. Dabei zeigen:

FIG 1    Ein Werkzeugmaschinensystem mit einer erfindungsgemäßen Bedieneinrichtung,

FIG 2    eine CNC-Steuerung mit einer erfindungsgemäßen Bedieneinrichtung,

FIG 3    verschiedene Kennlinien für einen Feed-Override,

FIG 4    verschiedene Kennlinien für einen Spindle-Override,

FIG 5    Kennlinien für einen Drehsteller-Winkelbereich > 360°,

FIG 6    Kennlinien für einen Drehsteller-Winkelbereich > 360°,

FIG 7    die Definition unterschiedlicher Bediensequenzen,

FIG 8    die Wirkung unterschiedlicher Bediensequenzen,

FIG 9    ein Auswahl-Menü für unterschiedliche Kennlinien und Winkelbereiche,

FIG 10    ein Auswahl-Menü für unterschiedliche Bediensequenzen,

FIG 11    Verfahrensschritte bei der Durchführung eines erfindungsgemäßen Verfahrens.

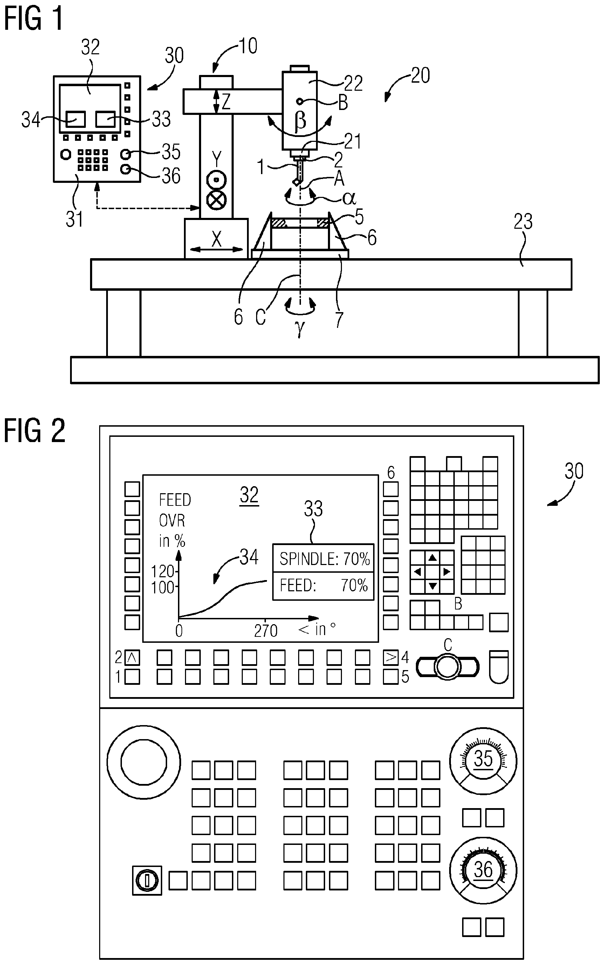

In FIG 1 ist schematisiert eine Werkzeugmaschine 20 dargestellt. Die Werkzeugmaschine 20 verfügt im Rahmen des Ausführungsbeispiels über sechs Maschinenachsen, durch die eine Relativbewegung zwischen einem Werkzeug 1, das im Rahmen des Ausführungsbeispiels in Form eines Drehmeißels 1 vorliegt, und einem Werkstück 5, im Ausführungsbeispiel angedeutet als Ventilsitz 5, durchgeführt werden kann. Das Werkzeug 1 ist dabei in einen Werkzeughalter 2 eingespannt, der mit einer Werkzeugspindel 21 verbunden ist, die von einem lagegeregelten Motor 22 angetrieben wird. Das Werkstück 5 ist durch Spannmittel 6 an einem Werkstücktisch 7 befestigt.

Der Drehmeißel 1 lässt sich mit der im Ausführungsbeispiel gezeigten Maschine 20 mit der Übersichtlichkeit halber in FIG 1 nicht dargestellten Antrieben in X-, Y- und Z-Richtung lagegeregelt translatorisch bewegen. Neben den drei Linearachsen umfasst die gezeigte Werkzeugmaschine 20 ferner die beiden, ebenfalls aus FIG 1 ersichtlichen lagegeregelten Rundachsen A und B, mit denen das Werkzeug 1 um die jeweilige Achse gedreht und ebenfalls lagegeregelt durch die Winkellagen $\alpha$ und $\beta$ relativ zu dem Werkstück 5 ausgerichtet werden kann.

Darüber hinaus verfügt die Maschine 20 über eine dritte lagegeregelte Rundachse C, die parallel zur Z-Achse verläuft, und bezüglich der der Werkstücktisch 7 relativ zu einem ruhenden Maschinengestell 23 drehbar gelagert ist. Dadurch kann das Werkstück 5 auch in einer Winkellage $\gamma$ relativ zu dem Werkzeug 1 positioniert werden. Auch hier wurde der Übersichtlichkeit halber auf eine Darstellung des Antriebs verzichtet. Abhängig von der durchzuführenden Bearbeitung ist bei der gezeigten Werkzeugmaschine 20 auch ein drehzahlgeregelter Betrieb bezüglich der Werkzeugspindel bzw. des Motors 22 möglich.

Die Werkzeugmaschine 20 gemäß dem Ausführungsbeispiel weist somit sechs Maschinenachsen (die 3 Linearachsen X, Y und Z sowie die 3 Rundachsen A, B und C) auf, d.h. es handelt sich um eine sogenannte 6-achsige Werkzeugmaschine (6-Achs-Maschine) 20.

Es sei an dieser Stelle angemerkt, dass die Werkzeugmaschine 20 selbstverständlich auch noch mehr, aber auch weniger als sechs Maschinenachsen aufweisen kann.

Die Werkzeugmaschine 20 ist mit einer numerischen Steuerung (CNC-Steuerung) 30 verbunden, die anhand eines von der CNC-Steuerung ausgeführten Teileprogramms und/oder einer Handbedieneingabe Lagesollwerte x, y, z, $\alpha$, $\beta$ und $\gamma$ zur Steuerung einer zwischen dem Werkzeug 1 und dem Werkstück 5 stattfindenden Relativbewegung ermittelt. Die numerische Steuerung 30 ermittelt die Lagesollwerte anhand des Teileprogramms, in dem die vom Werkzeug 1 in Bezug zum Werkstück 5 durchzuführende Bewegung in Form von Befehlen (und Positionswerten) definiert ist. Alternativ oder zusätzlich kann die Bewegung des Werkzeugs 1 und/oder des Werkstücks 5 auch mittels einer Handbedieneingabe über eine Bedieneinrichtung 31, die eine Anzeigevorrichtung in Form eines Displays 32 umfasst, der numerischen Steuerung 30 von einem Bediener vor Ort an der Werkzeugmaschine 20 vorgegeben werden. Die Bedieneinrichtung 31 weist hierzu insbesondere Eingabefelder, Tasten und Drehsteller (auch als Drehregler bezeichnet) auf. Weiterhin ist die Anzeigevorrichtung als grafische Bedienoberfläche, insbesondere als Touch-Display 32 ausgebildet, mittels der der Bediener - neben der Anzeige-Funktion - auch Eingaben in die CNC-Steuerung vornehmen und so z.B. die Werte bestimmter Parameter ändern kann. Hierfür weist das Display 32 insbesondere die Eingabefelder 33 und 34 auf.

Das von der CNC-Steuerung ausgeführte Teileprogramm wird üblicherweise von einem externen CAM/CAD-System (nicht dargestellt) und einem eventuell dem CAM/CAD-System nachgeschalteten sogenannten Postprozessor (nicht dargestellt) außerhalb der numerischen Steuerung 30 erzeugt und von dort auf die numerische Steuerung 30 übertragen.

Bei der Abarbeitung des Teileprogramms erzeugt die numerische Steuerung 30 in einem bestimmten Takt, dem Interpolationstakt, sowohl Lagesollwerte x, y und z für die Linearachsen als auch $\alpha$, $\beta$ und $\gamma$ (Winkellagen) für die Rundachsen. Durch diese Lagesollwerte wird das Werkzeug 1 mit vorgegebener Orientierung und einer bestimmten Vorschubgeschwindigkeit relativ zu dem Werkstück 5 entlang einer Bewegungsbahn bewegt.

Neben der genannten Drehbearbeitung des Werkstücks 5 ließe sich mit der gezeigten 6-Achs-Maschine ebenso beispielsweise eine Fräsbearbeitung des Werkstücks 5 durchführen, bei der das Werkzeug 1 als um die Spindelachse A rotierender Fräser (nicht dargestellt) ausgebildet ist, der in X-, Y- und Z-Richtung lagegeregelt positioniert wird und bei der das Werkstück 5 vorzugsweise ortsfest befestigt ist. Der Antrieb des Fräsers durch den Motor 22 und die Spindel 21 würde dabei drehzahlgeregelt mit einer durch das Teileprogramm vorgegebenen Spindeldrehzahl erfolgen.

Weiterhin zeigt Figur 1 noch die beiden Drehsteller 35 und 36, auf die nachfolgend noch näher eingegangen wird.

Figur 2 zeigt die in Figur 1 lediglich symbolisch veranschaulichte CNC-Steuerung 30 im Detail. Zu erkennen ist neben einer Vielzahl an Eingabetasten eine Anzeigevorrichtung in Form eines Displays 32, auf dem verschiedene Inhalte grafisch veranschaulichbar und insbesondere in Verbindung mit einem Anzeigegerät (z.B. Computer Maus, nicht dargestellt) Eingaben in die CNC-Steuerung 30 durchführbar sind.

Weiterhin umfasst die Bedieneirichtung der CNC-Steuerung 30 die Drehsteller 35 und 36, wobei mit dem Drehsteller 35 (als Spindeloverride bzw. "SPINDLE-Override" bezeichnet) der prozentuale Einstellwert (OVR-Wert) für die Spindeldrehzahl und mit dem Drehsteller 36 (als Vorschuboverride bzw. "FEED-Override" bezeichnet) der prozentuale Einstellwert für die Vorschubgeschwindigkeit bzw. Eilganggeschwindigkeit einstellbar ist.

In dem Displaybereich 33 des Displays 32 sind die aktuellen, prozentualen Einstellwerte für den SPINDLE-Override (70%) und den FEED-Override (70%) ersichtlich. Diese Einstellungen bedeuten, dass die aktuellen, tatsächlichen Werte für die Spindeldrehzahl und die Vorschubgeschwindigkeit jeweils nur 70% von ihrem programmierten Wert betragen.

In einem Display-Bereich 34 ist weiterhin die Kennlinie angegeben, aus der sich für einen bestimmten eingestellten Drehwinkel des FEED-Override 36 der dazugehörige OVR-Wert ergibt.

Aus dem flachen Verlauf der Kennlinie im oberen und im unteren Winkelbereich ergibt sich, dass der OVR-Wert in diesen Bereichen besonders fein justiert werden kann.

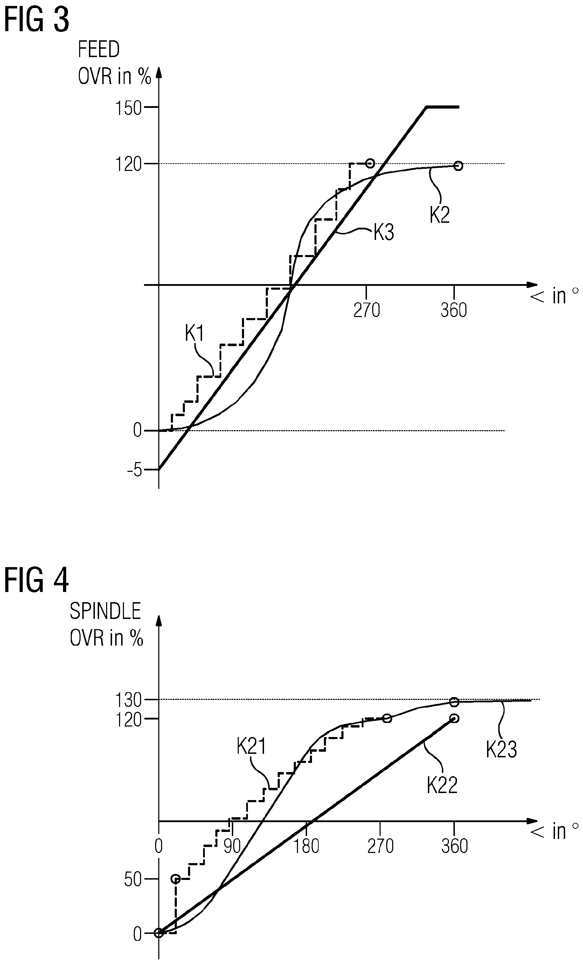

Die Figuren 3 und 4 veranschaulichen den Zusammenhang zwischen der jeweiligen Drehsteller-Einstellung (dem Drehwinkel) und dem OVR-Wert bei einem herkömmlichen Drehsteller im Vergleich zu einer gemäß der Erfindung erfolgten Zuordnung.

Figur 3 veranschaulicht für den FEED-OVR eine klassische, in der Regel vom Steuerungs-Hersteller vorgegebene, durch den Bediener nicht veränderbare, "gestufte" Kennlinie K1 mit "sprunghaften" Änderungen des FEED-OVR in 23 Stufen, wie sie beispielsweise bei herkömmlichen Drehstellern mit festen Endanschlägen und einem maximalen Drehwinkel von 270° verwirklicht ist.

Im Unterschied dazu ist eine "geschwungene", stetig verlaufende Kennlinie K2 ersichtlich, die z.B. 256 oder mehr Stufen eines digitalen Drehgebers nutzt, wodurch für den Benutzer keine Stufen bzw. Sprünge mehr erkennbar sind, weder bei der Bedienung der Werkzeugmaschine noch aus der grafischen Darstellung der Kennlinie, wie z.B. aus Figur 3, Kennlinie K2 ersichtlich ist.

Die Kennlinie K2 ist im Bereich geringer Vorschübe (niedriger OVR-Werte) und im Bereich hoher Vorschübe (hoher OVR-Werte) abgeflacht. Zudem kann diese Kennlinie wahlweise einen wirksamen Drehwinkelbereich von 6/8 Umdrehungen (270°) oder eben auch höhere Winkelbereiche bis 360 Grad oder sogar darüber hinaus aufweisen. Die OVR-Werte liegen für die im Beispiel gewählte Kennlinie K2 zwischen 0% und 120%.

Weiterhin ist beispielhaft in Figur 3 eine vom Bediener vorgebbare, lineare Kennlinie K3 ersichtlich, die alle vorhanden 256 Inkremente eines beispielhaften Drehstellers in einem Winkelbereich des Drehwinkels (Drehwinkelbereich) von 0° bis 360° nutzt.

Dargestellt ist im Beispiel der Kennlinie K3 ferner die Möglichkeit, dass mit dem OVR auch ein negativer Vorschub von z.B. -5% eingestellt werden kann. Die möglichen OVR-Werte liegen somit bei der beispielhaften Kennlinie K3 im Bereich zwischen -5% und 150%.

Ähnlich verhält es sich bei den beispielhaft in Figur 4 veranschaulichten Kennlinien.

Aus Figur 4 sind verschiedene Kennlinien für den "SPINDLE-OVR" ersichtlich, die auch hier den Zusammenhang zwischen dem Drehwinkel des Drehstellers in ° und dem damit eingestellten "SPINDLE-OVR-" Wert in % angeben.

Die Kennlinie K21 zeigt den "klassischen" Fall einer gestuften Kennlinie mit "sprunghaften" Änderungen des Vorschub-OVR in 16 Stufen, verteilt über einen Drehwinkelbereich von 0° bis 270°.

Die Kennlinie K22 und K23 sind Beispiele für von einem Benutzer definierte Kennlinien. K22 stellt einen linearen Zusammenhang zwischen dem Drehwinkel in einem Einstellbereich von 0° bis 360° her und erzeugt damit verbundene "SPINDLE-OVR-" Werte im Bereich von 0% und 120%. Im Unterschied dazu stellt K23 einen wenigstens im Wesentlichen (aus Sicht des Benutzers) "glatten", d.h. nicht sprunghaften bzw. nicht stufenförmigen Zusammenhang für Drehwinkel beginnend bei 0° und über 360° hinaus reichend und einem damit einhergehenden "SPINDLE-OVR-" Wert im Bereich von 0% und 150% her. Der abgeflachte Verlauf im Bereich niedriger oder hoher Einstellwerte ermöglicht eine feinere Einstellung in diesen Bereichen.

Insgesamt bieten die Möglichkeit der Einstellung individueller Kennlinien folgende Vorteile für den Benutzer:

- Freie Definition des wirksamen Drehwinkel-Bereiches z.B. zwischen 0° und 6/8tel einer Umdrehung (270°) oder einer vollen Umdrehung (360°);
- Freie Definition des wirksamen OVR-Wertebereiches z.B. zwischen -1% und +150%;
- Freie Definition des Zusammenhangs zwischen dem Drehwinkel und dem OVR-Wert und damit der Geschwindigkeits- bzw. Drehzahlbeeinflussung;
- Das Maß der Beeinflussung kann in einem bestimmten Bereich durch eine flache Kennlinie verfeinert werden (z.B. bei 0%);
- Das Maß der Beeinflussung kann in einem bestimmten Bereich durch eine steile Kennlinie vergröbert werden (z.B. nahe 75%) ;
- Es kann auch weiterhin ein "stufiges Verhalten" eingestellt werden, womit das Verhalten altbekannter Drehsteller nachgebildet werden kann;
- Möglichkeit der Einstellung eines Mix aus kontinuierlicher Kennlinie und stufiger Kennlinie;
- Die Anzahl der Inkremente (Stufen), die für die nichtlineare Kennlinie verwendet wird, kann frei gewählt werden;

In der Prozessbeeinflussung ergeben sich für den Anwender dadurch z.B. folgende Vorteile:

- Vergrößerung der Empfindlichkeit der Geschwindigkeitsvorgabe im niedrigen Geschwindigkeitsbereich um 0% beim Vorschub-OVR;
- Vergrößerung der Empfindlichkeit der Geschwindigkeitsvorgabe im hohen Geschwindigkeitsbereich um 100% beim Vorschub-OVR (Feinjustage zur geringfügigen Modifikation der Geschwindigkeit zur Vermeidung von Ratterschwingungen);
- Vergrößerung der Empfindlichkeit der Geschwindigkeitsvorgabe im hohen Geschwindigkeitsbereich um 100% beim Spindel-OVR (Feinjustage zur geringfügigen Modifikation der Geschwindigkeit zur Vermeidung von Ratterschwingungen);

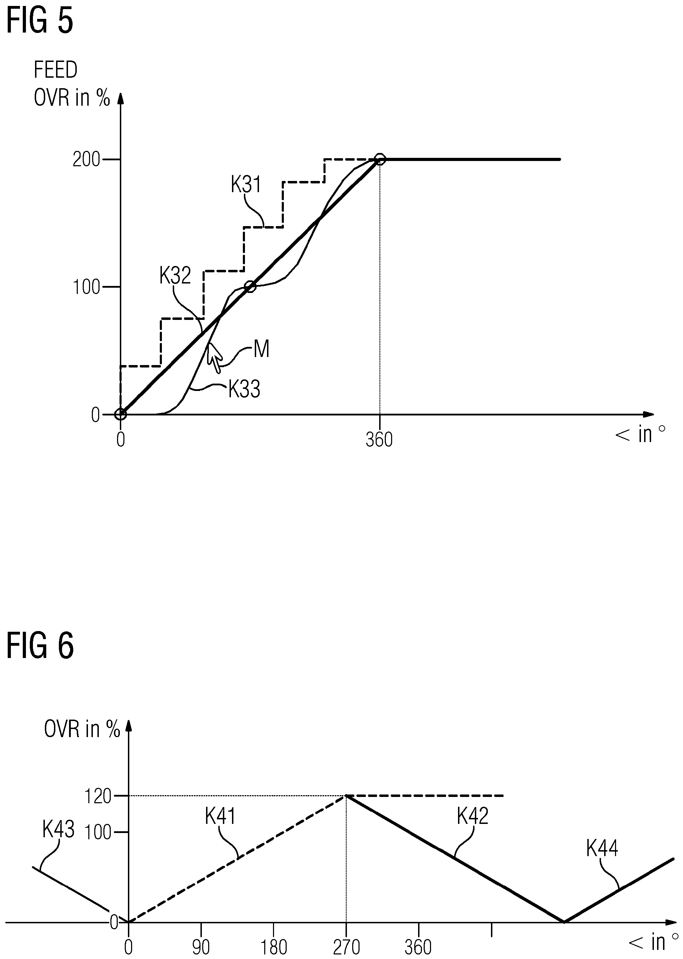

Figur 5 zeigt Beispiele zur Einstellung des "FEED-OVR" (Vorschub-Overrides). Dabei zeigt Kennlinie K31 einen, stufenförmigen Verlauf der Kennlinie in einem Drehwinkel-Bereich von 0° bis 270° und mit FEED-OVR-Werten in einem Bereich zwischen 0% und 200%.

Kennlinie K32 zeigt einen linearen glatten Verlauf für einen Drehwinkel-Bereich von 0° bis 360° mit FEED-OVR-Werten in einem Bereich zwischen 0% und 200%.

Kennlinie K33 zeigt einen glatten, "geschwungenen" Verlauf für einen Drehwinkel-Bereich von 0° bis 360° mit FEED-OVR-Werten in einem Bereich zwischen 0% und 200%.

Außerhalb des gültigen Drehwinkel-Bereiches (d.h. für Drehwinkel < 0° oder > 360°) wird der zuletzt geltende OVR-Wert beibehalten.

Figur 6 zeigt ein Ausführungsbeispiel, bei dem sich der wirksame Drehwinkel-Bereich auf mehr als eine Umdrehung (360°) erstreckt.

In einem ersten Drehwinkel-Bereich von 0° bis 270° gilt ein linear steigender Zusammenhang zu einem OVR-Wert im Bereich von 0% und 120% (vgl. Kennlinie K41). Darüber hinaus gilt in einem zweiten Drehwinkel-Bereich von 270° bis 540° ein linear fallender Zusammenhang zu einem OVR-Wert im Bereich von 120% und 0% (vgl. Kennlinie K42). Dieser Wechsel zwischen einer steigenden und einer fallenden Kennlinie für Wertebereiche von 270° setzt sich endlos nach links und rechts fort. So ergibt sich eine linear fallende Kennlinie K43 im Bereich von -270° bis 0°. Auch könnten für die Kennlinien K42 oder K43 andere Steigungen bzw. Drehwinkelbereiche vorgegeben werden als für die Kennlinie 41.

Insgesamt bieten die beispielhaft in den Figuren 5 und 6 veranschaulichten Möglichkeit der Einstellung individueller Kennlinien folgende Vorteile für den Benutzer:

- Die letzte Endstellung wird nicht wie heute üblich "gehalten", sondern es werden weiter Inkremente ausgewertet, z.B. endlos Zig-Zag (vgl. Figur 6);

- Beim Weiterdrehen des Drehstellers schließt sich an eine erste Bedienfunktion (Wirkung), z.B. lineare Zunahme des OVR-Wertes, eine weitere Bedienfunktion bzw. Wirkung an, z.B. lineare Abnahme des OVR-Wertes:

  ○ z.B. bei Überschreiten von 120% findet wieder eine Verringerung des OVR-Wertes statt,
  ○ z.B. bei Unterschreiten der 0% findet wieder eine Vergrößerung des OVR statt, ggf. mit anderer Steigung,
  ○ Wird der minimale oder maximale OVR-Wert, z.B. 0% oder 120%, "durchlaufen", so kann dieser Wert auch für einen bestimmten Zeitraum automatisch fixiert werden, um dem Bediener den erreichten Endwert kenntlich zu machen, da dieser Wert nur schwer genau getroffen werden kann;

- Auf Wunsch des Benutzers gibt es keine "Endstellungen" mehr, z.B. bei Wahl einer aus Figur 4 ersichtlichen, "asymptotischen" Kennlinie K23;

- Alternative Kennlinien könnten beim Unterschreiten des 0%-Wertes auch einen negativen OVR-Wert und damit eine negative Vorschubgeschwindigkeit ("Rückwärtsfahren") oder Spindeldrehzahl ("Drehrichtungsumkehr") ausgegeben.

In der Prozessbeeinflussung ergeben sich für den Anwender dadurch z.B. folgende Vorteile:

- Die Auflösung für die Geschwindigkeitsbeeinflussung kann über die Anzahl der Umdrehungen des OVR erhöht werden. Dies hat z.B. Vorteile bei kleinen Modifikationen, die der Maschinenbediener macht, um das Rattern bei einer Fräsbearbeitung oder Drehbearbeitung zu unterbinden;

- Neue Möglichkeiten wie "Rückwärtsfahren" durch Betätigung des Override-Stellers.

Um eine sehr feine Einstellung des aktuellen Vorschubs oder der Spindeldrehzahl zu möglich, die beispielsweise benötigt wird, um Ratterschwingungen durch den Bediener effizient zu unterdrücken, sieht die Erfindung eine feinfühlige Variation eben des Vorschubs oder der Spindeldrehzahl vor, insbesondere dadurch, dass der verwendete Drehwinkelbereich des Drehstellers 360° (eine Umdrehung) übersteigt.

Problematisch bei dieser Variante ist, dass der Bediener bei einem Verstellbereich von z.B. 10 Umdrehungen den OVR nicht 10x komplett drehen möchte, um von einem Vorschub von 0% auf einen Vorschub von 100% zu kommen. Nicht zuletzt aus diesem Grund sieht die Erfindung die Definition von Bediensequenzen vor, mit deren Hilfe bestimmte Bedienfunktionen, z.B. Sprünge bestimmter Werte, ausgelöst werden können.

Folgende Voraussetzungen sind bei einem erfindungsgemäßen, endlos drehenden OVR erfüllt, damit Bediensequenzen definiert und verwendet werden können:

- Die Auswertung der Verdrehgeschwindigkeit in [Inkrementen/Zeiteinheit] des OVR;
- Die Erkennung spezifizierter Einzel-Drehmuster, welche innerhalb eines festgelegten ersten Zeitraums stattfinden müssen, um als solche erkannt zu werden;
- Die Erkennung einer Abfolge von mehreren Einzel-Drehmustern, welche innerhalb eines festgelegten zweiten Zeitraums stattfinden müssen, um als solche erkannt zu werden.

Beispiele für "Einzelmuster" und deren Auswirkungen sind:

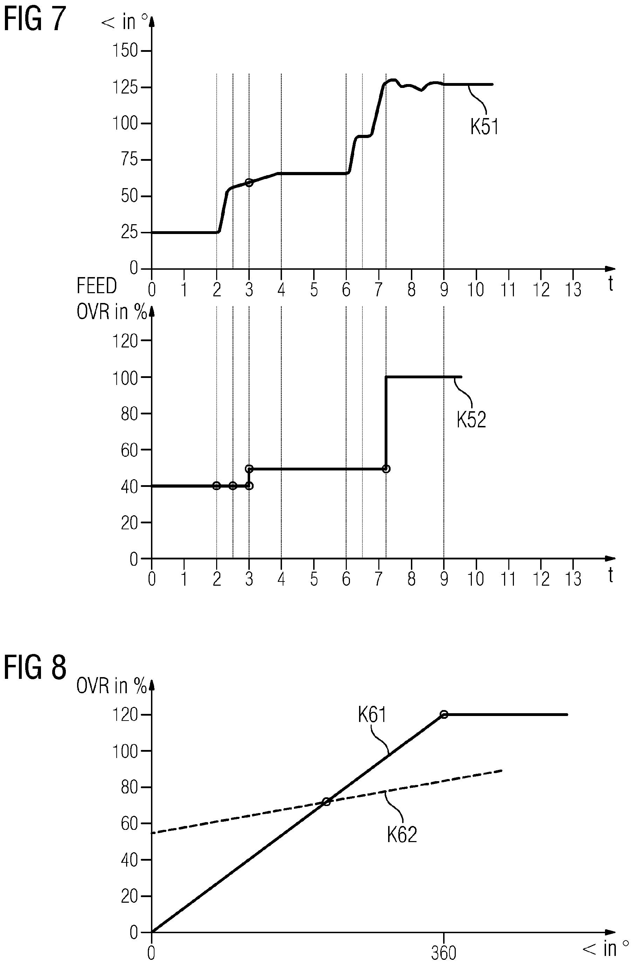

- Durch ein "Schnelldrehen" in positiver Drehrichtung mit Verdrehgeschwindigkeit z.B. >25 Ink / s wird ein vordefinierter "positiver OVR-Sprung" von z.B. 10% erkannt und sofort eingestellt. Da sich der OVR nach der sofortigen Einstellung der 10%-igen Änderung noch immer drehen kann, wird die Auswertung des OVR anschließend für einen definierbaren Zeitraum unterdrückt und der OVR stabil auf der um 10% geänderten Einstellung gehalten, siehe Figur 7, Zeitbereich t zwischen 2s und 4s.

- Durch ein "Schnelldrehen" in negativer Drehrichtung mit Verdrehgeschwindigkeit z.B. >25 Ink / s wird ein vordefinierter "negativer OVR-Sprung" von -10% erkannt und sofort eingestellt. Da sich der OVR nach der sofortigen Einstellung der -10%-igen Änderung noch immer drehen kann, wird die Auswertung des OVR für einen definierbaren Zeitraum unterdrückt und der OVR stabil auf der um -10% geänderten Einstellung gehalten.

Beispiele für eine "Abfolge von Einzelmustern" und deren Auswirkungen sind:

- Durch ein zweimalig kurz hintereinander ausgeführtes "Schnelldrehen" in positiver Drehrichtung mit Verdrehgeschwindigkeit von jeweils z.B. >25 Ink / s und einer dazwischenliegenden Pause von <1s wird ein gewünschter, vordefinierter "OVR-Wert = 100%" erkannt und sofort eingestellt. Da sich der OVR-Wert nach der sofortigen Änderung auf 100% noch immer drehen kann, wird die Auswertung des OVR anschließend für einen definierbaren Zeitraum unterdrückt und der OVR auf der neuen Einstellung (100%) gehalten, siehe Figur 7.

- Durch ein zweimalig kurz hintereinander ausgeführtes "Schnelldrehen" in negativer Drehrichtung mit Verdrehgeschwindigkeit von jeweils z.B. >25 Ink / s und einer dazwischenliegenden Pause von <1s wird ein gewünschter OVR von 0% erkannt und sofort eingestellt. Da sich der OVR nach der sofortigen Änderung auf 0% noch immer drehen kann, wird die Auswertung des OVR für einen definierbaren Zeitraum unterdrückt und der OVR auf der neuen Einstellung gehalten (nicht dargestellt).

- Durch die vordefinierte Abfolge (Bediensequenz) "Schnelldrehen" in positiver Richtung und "Schnelldrehen" in negativer Richtung (innerhalb eines bestimmten Zeitraums) kann beispielsweise die damit verbundene, vordefinierte Bedienfunktion "Umschaltung der Feinheit der OVR-Kennlinie um den Faktor 10" erreicht werden, siehe Figur 8. Die Kennlinie K61 repräsentiert den Zusammenhang vor der Umschaltung ("normale" Kennlinie), die Kennlinie K62 den Zustand nach der Umschaltung, wobei die Kennlinie K62 1/10 der Steigung der Kennlinie K61 aufweist.

- Auch ist das automatische Umschalten auf eine feinere OVR-Kennlinie möglich, immer dann wenn eine neue OVR statisch erreicht wird. Ein Zurückschalten auf die Original-Kennlinie kann dann beispielsweise - ebenfalls automatisch - durch einen Schnelldrehvorgang erreicht werden. Die feine Kennlinie kommt dann zum Tragen, wenn der Maschinenbediener den OVR-Steller zur Feinjustage langsam dreht, also z.B. < 10 Inkremente/s.

- Durch weitere ähnliche Abfolgen wie beispielsweise "Schnelldrehen" in positiver Richtung und anschließendes "Schnelldrehen" in negativer Richtung unmittelbar gefolgt von nochmaligem "Schnelldrehen" in positiver Richtung können weitere beliebige OVR-Einstellung und Charakteristika eingestellt werden.

- Ebenso sind - neben den beispielhaft gezeigten - beliebige weitere Bedienfunktionen möglich, die bestimmten Bedienhandlungen (Bediensequenzen) zugeordnet werden können.

Insgesamt bieten die Möglichkeit der Definition von Bediensequenzen und deren Zuordnung zu bestimmten Bedienfunktionen folgende Vorteile für den Benutzer:

- Werden nicht nur die überfahrenen Inkremente ausgewertet, sondern auch die Drehgeschwindigkeit (überfahrenen Inkremente je Zeiteinheit) sowie die Abfolge von Mustern, so bietet der OVR-Steller Möglichkeiten für erweiterte Bedienhandlungen;

- Beispielsweise kann der OVR über 10 Umdrehungen ausgewertet werden und der Bediener kann trotzdem auf einfachste Art und Weise schnell eine 0%- oder eine 100%- Stellung (oder beliebige andere vordefinierte OVR-Werte) erreichen sowie ggf. die zwischenliegenden Positionen in 10%- (oder beliebigen anderen, vordefinierten) Schritten;

- Ein einfaches Umschalten der Empfindlichkeit der OVR-Kennlinie von "Grob" auf "Fein" und zurück, oder generell ein schnelles Umschalten zwischen verschiedenen Kennlinien, ist möglich.

In der Prozessbeeinflussung ergeben sich für den Anwender dadurch z.B. folgende Vorteile:

- Vergrößerung der Empfindlichkeit der Geschwindigkeitsvorgabe im gesamten Geschwindigkeitsbereich zwischen 0% und einer Obergrenze, z.B. 120%, beim Vorschuboverride;
- Vergrößerung der Empfindlichkeit der Geschwindigkeitsvorgabe im gesamten Geschwindigkeitsbereich beim Spindeloverride (Feinjustage zur geringfügigen Modifikation der Geschwindigkeit zur Vermeidung von Ratterschwingungen).

Gemäß der Erfindung besteht die Möglichkeit, dass ein Bediener das Verhalten seines endlos drehenden OVR-Stellers individuell, insbesondere über das HMI der Steuerung, konfigurieren kann. Dazu gehören beispielsweise:

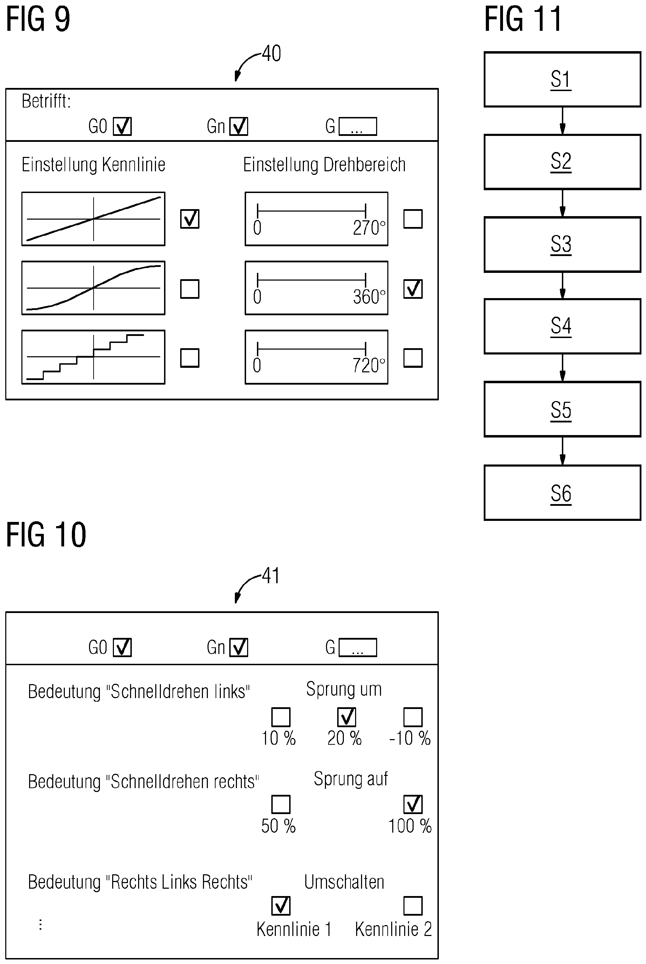

- Auswahl einer von mehreren mittels der Werkzeugmaschine durchführbaren Funktionen, für die die nachfolgend aufgezeigten Einstellungen gelten sollen. In den Ausführungsbeispielen gemäß den Figuren 9 und 10 besteht hierzu jeweils die Möglichkeit, diese Auswahl durch Markieren der Check-Boxen "G0" (für einen Eilang-Befehl) oder "Gn" (für alle Nicht-Eilang-Befehle) zu treffen oder in die Felder "G □" jeweils eine Zahl einzutragen, die den speziellen G-Befehl spezifiziert, für den die nachfolgenden Einstellungen gelten sollen;

- Auswahl einer von mehreren vorgegebenen Kennlinien des OVR-Stellers über eine Liste im Bedienbereich des HMI 40 (vgl. Figur 9). Dabei kann der Bediener im Ausführungsbeispiel gemäß Figur 9 zwischen den Kennlinien-Formen "linear", "geschwungen" oder "stufig" durch Markieren der jeweiligen Check-Box wählen. Nach der entsprechenden Auswahl gelangt der Bediener ggf. in ein Untermenü (nicht dargestellt), in dem Details der gewählten Kennlinienform (Steigung, Parameter eines mathematischen Terms, Stufenanzahl und -höhe) eingestellt werden können;

- Neudefinition einer individuellen Kennlinie des OVR-Stellers im Bedienbereich der HMI;

- Auswahl des individuellen auszuwertenden Drehwinkelbereiches des OVR über eine vorgegebene Liste im Bedienbereich des HMI (vgl. Figur 9). Dabei kann der Bediener im Ausführungsbeispiel durch Anwählen der entsprechenden Check-Box zwischen den wirksamen Drehwinkelbereichen "0° bis 270°", "0° bis 360°" und "0° bis 720°" wählen;

- Eingabe eines individuellen auszuwertenden Drehwinkelbereiches des OVR über den Bedienbereich des HMI;

- Zuordnung vordefinierter Bedienhandlungen (Bediensequenzen) zu vordefinierten Bedienfunktionen (Wirkungen) der jeweiligen Bedienhandlung. Dabei kann der Bediener im Ausführungsbeispiel gemäß Figur 10 auf einer ersichtlichen Bildschirmmaske 41 des HMI durch Belegen der entsprechenden Check-Box auswählen, ob die Bediensequenz "Schnelldrehen links" einen Sprung des OVR-Wertes um 10%, 20% oder - 10% auslöst, ob die Bediensequenz "2x Schnelldrehen rechts" einen Sprung des OVR-Wertes auf den Wert 50% oder 100% auslöst oder ob die Bediensequenz "Rechts - Links - Rechts" ein "Umschalten auf Kennlinie 1" oder ein "Umschalten auf Kennlinie 2" auslöst;

- Freie Zuordnung von Drucktasten und Bedienfunktion über das HMI (mit Anpassung der Funktionsbezeichnung im Touch-Druckschalter) .

In Figur 11 sind beispielhaft Verfahrensschritte 1 bis 6 bei der Durchführung eines erfindungsgemäßen Verfahrens dargestellt:

In einem ersten Verfahrensschritt S1 wird mittels einer HMI-Bedienoberfläche einer mit einer Werkzeugmaschine verbundenen CNC-Steuerung die Wirkung des Vorschuboverrides, das heißt die Veränderung des OVR-Wertes in Abhängigkeit des Drehwinkels eines FEED-OVR-Drehstellers (FEED-OVR), anhand einer durch den Bediener vorgebbaren Kennlinie und/oder anhand von wenigstens einer durch den Bediener vorgebbaren Bediensequenz eingestellt.

Dabei ist es insbesondere möglich, unterschiedlichen Funktionen der Werkzeugmaschine (Drehen, Fräsen, Bohren, Bewegung im Eilgang etc.) verschiedene Kennlinien bzw. verschiedene Bediensequenzen zuzuordnen.

In einem zweiten Verfahrensschritt S2 wird mittels der HMI-Bedienoberfläche die Wirkung des Spindeloverrides, das heißt die Veränderung des OVR-Wertes in Abhängigkeit des Drehwinkels eines SPINDLE-OVR-Drehstellers (SPINDLE-OVR), anhand einer durch den Bediener vorgebbaren Kennlinie und/oder anhand von wenigstens einer durch den Bediener vorgebbaren Bediensequenz eingestellt.

Auch hier ist es insbesondere möglich, unterschiedlichen Funktionen der Werkzeugmaschine (Drehen, Fräsen, Bohren, Bewegung im Eilgang etc.) verschiedene Kennlinien bzw. verschiedene Bediensequenzen zuzuordnen.

In einem dritten Verfahrensschritt S3 wird auf der CNC-Steuerung ein Teileprogramm zur Bearbeitung eines Werkstücks mittels der Werkzeugmaschine aufgerufen und gestartet.

In einem vierten Verfahrensschritt S4 wird der Vorschuboverride durch manuelle Betätigung des FEED-OVR durch den Benutzer gemäß der in Verfahrensschritt S1 vorgegebenen Kennlinie oder Bediensequenz und in Abhängigkeit der aktuell von der Werkzeugmaschine ausgeführten Funktion eingestellt.

In einem fünften Verfahrensschritt S5 wird der Spindeloverride durch manuelle Betätigung des SPINDLE-OVR durch den Benutzer gemäß der in Verfahrensschritt S2 vorgegebenen Kennlinie oder Bediensequenz und in Abhängigkeit der aktuell von der Werkzeugmaschine ausgeführten Funktion eingestellt.

In einem Verfahrensschritt S6 wird eine Funktion der Werkzeugmaschine, insbesondere eine Bearbeitung des Werkstücks durch die Werkzeugmaschine, in Abhängigkeit des eingestellten Vorschuboverrides und des eingestellten Spindeloverrides durchgeführt.

Vorsorglich wird darauf hingewiesen, dass die beispielhaft genannten Verfahrensschritte S1 bis S6 bei einem erfindungsgemäßen Verfahren nicht alle und auch nicht in der genannten Reihenfolge ausgeführt werden müssen.


**Patentansprüche**

1. Bedieneinrichtung (31) für eine CNC-Steuerung (30) zur Steuerung einer Werkzeugmaschine (20),

   wobei die Werkzeugmaschine (20) mehrere Maschinenachsen (X, Y, Z, A, B, C) umfasst, mittels der ein in eine Werkzeugaufnahme (2) einer Werkzeugspindel (21) eingesetztes Werkzeug (1) relativ zu einem Werkstück (5) verstellbar und/oder um eine Werkzeugspindelachse (A) rotierbar ist,

   wobei die Bedieneinrichtung (31) wenigstens einen manuell von einem Bediener der Bedieneinrichtung (31) bedienbaren, endlos drehbaren Drehsteller (35, 36) aufweist, durch den eine Vorschubgeschwindigkeit, mit der sich das Werkzeug (1) relativ zu dem Werkstück (5) bewegt, und/oder eine Spindeldrehzahl manuell durch Drehen an einem Drehknopf des Drehstellers (35, 36) durch den Bediener einstellbar ist,

   **dadurch gekennzeichnet, dass** die Bedieneinrichtung (31) eine grafische Bedienerschnittstelle (32) umfasst, mittels der die Wirkung einer mittels des Drehstellers (35, 36) durchgeführten Bedienhandlung auf die Vorschubgeschwindigkeit und/oder die Spindeldrehzahl einstellbar ist.

2. Bedieneinrichtung (31) nach Anspruch 1, wobei durch Betätigung des Drehstellers (35, 36) ein Drehwinkel des Drehknopfes einstellbar ist und wobei zum Einstellen der Wirkung der Bedienhandlung ein Zusammenhang zwischen einem Drehwinkel und einem prozentualen Einstellwert vorgebbar ist, wobei der prozentuale Einstellwert ein Verhältnis zwischen einer programmierten Vorschubgeschwindigkeit und/oder einer programmierten Spindeldrehzahl und einer tatsächlichen Vorschubgeschwindigkeit und/oder einer tatsächlichen Spindeldrehzahl bestimmt.

3. Bedieneinrichtung (31) nach Anspruch 1 oder 2, wobei durch wenigstens eine vorbestimmte Bedienhandlung, insbesondere eine Bediensequenz, eine vorbestimmte Bedienfunktion ausführbar ist und wobei ein Zusammenhang zwischen der Bedienfunktion und dem prozentualen Einstellwert vorgebbar ist.

4. Bedieneinrichtung (31) nach Anspruch 2 oder 3, wobei eine Kennlinie (K1, K2, K3; K21, K22, K23; K31, K32, K33;

K41, K42, K43, K44; K51, K52; K61, K62) vorgebbar ist, die den Zusammenhang zwischen dem Drehwinkel und dem prozentualen Einstellwert bestimmt.

5. Bedieneinrichtung (31) nach Anspruch 4, wobei in einem Auswahl-Menü (40) eine Anzahl an Kennlinien vorgegeben ist, von denen eine durch den Bediener auswählbar ist, wobei die ausgewählte Kennlinie den Zusammenhang zwischen dem Drehwinkel und dem prozentualen Einstellwert bestimmt.

6. Bedieneinrichtung (31) nach Anspruch 5, wobei die Kennlinie, insbesondere mittels grafischer Hilfsmittel, individuell konfigurierbar ist.

7. Bedieneinrichtung (31) nach einem der Ansprüche 4 bis 6, wobei die Kennlinie (K2) wenigstens abschnittweise einen glatten und/oder wenigstens abschnittweise einen stufenförmigen Verlauf (K1) aufweist.

8. Bedieneinrichtung (31) nach einem der Ansprüche 4 bis 7, wobei die Kennlinie (K23) einen Drehwinkelbereich größer 360° und/oder negative Drehwinkel (K43) abdeckt.

9. Bedieneinrichtung (31) nach einem der Ansprüche 4 bis 8, wobei unterschiedlichen Drehwinkelbereichen unterschiedliche Bedienfunktionen zuordenbar sind.

10. Bedieneinrichtung (31) nach einem der Ansprüche 2 bis 9, wobei bestimmten Drehwinkelbereichen, insbesondere negativen Drehwinkeln, negative prozentuale Einstellwerte zuordenbar sind und wobei sich die Rotations-Richtung der Spindel oder die Bewegungsrichtung des Werkzeugs in diesen Drehwinkelbereichen bzw. bei diesen Drehwinkeln gegenüber anderen Drehwinkelbereichen bzw. anderen Drehwinkeln umkehrt.

11. Bedieneinrichtung (31) nach einem der Ansprüche 3 bis 10, wobei unterschiedlichen Bedienhandlungen bzw. Bediensequenzen unterschiedliche Bedienfunktionen zuordenbar sind.

12. Bedieneinrichtung (31) nach Anspruch 11, wobei Bedienhandlungen bzw. Bediensequenzen individuell gestaltbar und/oder lernbar sind.

13. Bedieneinrichtung (31) nach einem der vorherigen Ansprüche, wobei die Wirkung der mittels des Drehsteller durchgeführten Bedienhandlung auf die Vorschubgeschwindigkeit und/oder die Spindeldrehzahl abhängig von einer von der Werkzeugmaschine (20) ausführbaren Funktion vorgebbar ist.

14. Verfahren zum Betrieb einer mittels einer CNC-Steuerung (30), die eine Bedieneinrichtung (31) umfasst, gesteuerten Werkzeugmaschine (20),

   wobei die Werkzeugmaschine (20) mehrere Maschinenachsen (X, Y, Z, A, B, C) umfasst, mittels der ein in eine Werkzeugaufnahme (2) einer Werkzeugspindel (21) eingesetztes Werkzeug (1) relativ zu einem Werkstück (5) verstellt wird und/oder um eine Werkzeugspindelachse (A) rotiert,
   wobei die Bedieneinrichtung (31) wenigstens einen manuell von einem Bediener der Bedieneinrichtung (31) bedienbaren, endlos drehbaren Drehsteller (35, 36) aufweist, durch den eine Vorschubgeschwindigkeit, mit der sich das Werkzeug (1) relativ zu dem Werkstück (5) bewegt, und/oder eine Spindeldrehzahl manuell durch Drehen an einem Drehknopf des Drehstellers (35, 36) durch den Bediener eingestellt wird,
   **dadurch gekennzeichnet, dass** die Bedieneinrichtung (31) eine grafische Bedienerschnittstelle (32) umfasst, mittels der die Wirkung einer mittels des Drehstellers durchgeführten Bedienhandlung auf die Vorschubgeschwindigkeit und/oder die Spindeldrehzahl eingestellt wird,
   wobei ein auf der CNC-Steuerung bereitgestelltes Programm gestartet wird, welches die Bewegung des Werkzeugs relativ zu dem Werkstück vorgibt,
   wobei eine mittels des Drehstellers durchgeführte Bedienhandlung die Vorschubgeschwindigkeit und/oder die Spindeldrehzahl gemäß der Einstellung ändert.

15. CNC-Steuerung mit einer Bedieneinrichtung (31) nach einem der Ansprüche 1 bis 13.

## Claims

1. Operating facility (31) for a CNC control system (30) for controlling a machine tool (20),

wherein the machine tool (20) comprises a plurality of machine axes (X, Y, Z, A, B, C) by means of which a tool (1) inserted into a tool receptacle (2) of a tool spindle (21) is able to be displaced relative to a workpiece (5) and/or to be rotated about a tool spindle axis (A),

wherein the operating facility (31) has at least one endlessly rotatable rotary controller (35, 36) which is able to be manually operated by an operator of the operating facility (31), by way of which rotary controller a feed rate with which the tool (1) is moved relative to the workpiece (5) and/or a spindle rotary speed is able to be manually set by the operator by rotating a rotary knob of the rotary controller (35, 36),

**characterised in that** the operating facility (31) comprises a graphical user interface (32) by means of which the effect of an operating action carried out by means of the rotary controller (35, 36) on the feed rate and/or the spindle rotary speed is able to be adjusted.

2. Operating facility (31) according to claim 1, wherein by actuating the rotary controller (35, 36), a rotary angle of the rotary knob is able to be set and wherein for setting the effect of the operating action, a relationship between a rotation angle and a percentage set value is able to be specified, wherein the percentage set value determines a relationship between a programmed feed rate and/or a programmed spindle rotary speed and an actual feed rate and/or an actual spindle rotary speed.

3. Operating facility (31) according to claim 1 or 2, wherein by way of at least one predetermined operating action, in particular an operating sequence, a predetermined operating function is able to be executed and wherein a relationship between the operating function and the percentage set value is able to be specified.

4. Operating facility (31) according to claim 2 or 3, wherein a characteristic line (K1, K2, K3; K21, K22, K23; K31, K32, K33; K41, K42, K43, K44; K51, K52; K61, K62) is able to be specified which determines the relationship between the rotation angle and the percentage set value.

5. Operating facility (31) according to claim 4, wherein in a selection menu (40), a number of characteristic lines is specified from which one is able to be selected by the operator, wherein the selected characteristic line determines the relationship between the rotation angle and the percentage set value.

6. Operating facility (31) according to claim 5, wherein the characteristic line is able to be configured individually, in particular using graphical aids.

7. Operating facility (31) according to one of claims 4 to 6, wherein the characteristic line (K2) has an at least partially smooth and/or an at least partially stepped shape (K1).

8. Operating facility (31) according to one of claims 4 to 7, wherein the characteristic line (K23) covers a rotation angle range of greater than 360° and/or a negative rotation angle (K43) .

9. Operating facility (31) according to one of claims 4 to 8, wherein different rotation angle ranges are able to be assigned different operating functions.

10. Operating facility (31) according to one of claims 2 to 9, wherein negative percentage set values are able to be assigned to particular rotation angle ranges, in particular negative rotation angles, and wherein the rotation direction of the spindle or the movement direction of the tool in these rotation angle ranges or at these rotation angles becomes reversed in relation to other rotation angle ranges or other rotation angles.

11. Operating facility (31) according to one of claims 3 to 10, wherein different operating actions or operating sequences are able to be assigned different operating functions.

12. Operating facility (31) according to claim 11, wherein operating actions or operating sequences are able to be individually configured and/or learned.

13. Operating facility (31) according to one of the preceding claims, wherein the effect of the operating action carried out by means of the rotary controller on the feed rate and/or the spindle rotary speed is able to be specified dependent upon a function that is able to be carried out by the machine tool (20) .

14. Method for operating a machine tool (20) controlled by means of a CNC control system (30) which comprises an operating facility (31),

wherein the machine tool (20) comprises a plurality of machine axes (X, Y, Z, A, B, C) by means of which a tool (1) inserted into a tool receptacle (2) of a tool spindle (21) is displaced relative to a workpiece (5) and/or is rotated about a tool spindle axis (A),

wherein the operating facility (31) has at least one endlessly rotatable rotary controller (35, 36) which is able to be manually operated by an operator of the operating facility (31), by way of which a feed rate with which the tool (1) is moved relative to the workpiece (5) and/or a spindle rotary speed is manually set by the operator by rotating a rotary knob of the rotary controller (35, 36),

**characterised in that** the operating facility (31) comprises a graphical user interface (32) by means of which the effect of an operating action carried out by means of the rotary controller on the feed rate and/or the spindle rotary speed is set,

wherein a program which is provided on the CNC control system and which specifies the movement of the tool relative to the workpiece is started,

wherein an operating action carried out by means of the rotary controller changes the feed rate and/or the spindle rotary speed according to the setting.

15. CNC control system with an operating facility (31) according to one of claims 1 to 13.

## Revendications

1. Dispositif (31) opératoire d'une commande CNC (30) pour la commande d'une machine-outil (20),

dans lequel la machine-outil (20) comprend plusieurs axes (X, Y, Z, A, B, C) de machine, au moyen desquels un outil (1) inséré dans un logement (2) d'outil d'une broche (21) à outil peut être déplacé par rapport à une pièce (5) et/ou peut tourner autour d'un axe (A) de la broche à outil,

dans lequel le dispositif (31) opératoire a au moins un actuateur (35, 36) rotatif pouvant être opéré manuellement par un opérateur du dispositif (31) opératoire, pouvant tourner sans fin et par lequel une vitesse d'avance, à laquelle l'outil (1) se déplace par rapport à la pièce (5), et/ou une vitesse de rotation de la broche peut être réglée manuellement par l'opérateur en faisant tourner un bouton à tourner de l'actuateur (35, 36) rotatif,

**caractérisé en ce que**

le dispositif (31) opératoire comprend une interface (32) opérateur graphique, au moyen de laquelle l'effet d'une manipulation opératoire effectuée au moyen de l'actuateur (35, 36) rotatif sur la vitesse d'avance et/ou la vitesse de rotation de la broche est réglable.

2. Dispositif (31) opératoire suivant la revendication 1, dans lequel par l'actionnement de l'actuateur (35, 36) rotatif, un angle de rotation du bouton à tourner est réglable et dans lequel, pour le réglage de l'effet de la manipulation opératoire, il peut être prescrit une relation entre un angle de rotation et une valeur de réglage en pourcentage, dans lequel la valeur de réglage en pourcentage détermine un rapport entre une vitesse d'avance programmée et/ou une vitesse de rotation programmée de la broche et une vitesse d'avance réelle et/ou une vitesse de rotation réelle de la broche.

3. Dispositif (31) opératoire suivant la revendication 1 ou 2, dans lequel par au moins une manipulation opératoire déterminée à l'avance, en particulier une séquence opératoire, une fonction opératoire déterminée à l'avance peut être réalisée et dans lequel une relation entre la fonction opératoire et la valeur de réglage en pourcentage peut être prescrite.

4. Dispositif (31) opératoire suivant la revendication 2 ou 3, dans lequel il peut être prescrit une courbe (K1, K2, K3 ; K21, K22, K23 ; K31, K32, K33 ; K41, K42, K43, K44 ; K51, K52 ; K61, K62) caractéristique, qui détermine la relation entre l'angle de rotation et la valeur de réglage en pourcentage.

5. Dispositif (31) opératoire suivant la revendication 4, dans lequel il est prescrit dans un menu (40) de sélection, un nombre de courbes caractéristiques, dont l'une peut être choisie par l'opérateur, dans lequel la courbe caractéristique choisie détermine la relation entre l'angle de rotation et la valeur de réglage en pourcentage.

6. Dispositif (31) opératoire suivant la revendication 5, dans lequel la courbe caractéristique peut être configurée individuellement, en particulier à l'aide d'un moyen auxiliaire graphique.

7. Dispositif (31) opératoire suivant l'une des revendications 4 à 6, dans lequel la courbe caractéristique (K2) a au moins par endroit un tracé (K1) lisse et/ou au moins par endroit en palier.

8. Dispositif (31) opératoire suivant l'une des revendications 4 à 7, dans lequel la courbe caractéristique (K23) recouvre une plage d'angle de rotation plus grande que 360° et/ou un angle (K43) de rotation négatif.

9. Dispositif (31) opératoire suivant l'une des revendications 4 à 8, dans lequel des plages différentes d'angles de rotation peuvent être affectées à des fonctions opératoires différentes.

10. Dispositif (31) opératoire suivant l'une des revendications 2 à 9, dans lequel des plages déterminées d'angles de rotation, en particulier des angles de rotation négatifs, peuvent être affectés à des valeurs de réglage en pourcentage négatives et dans lequel le sens de rotation de la broche ou le sens de déplacement de l'outil dans ces plages d'angles de rotation ou à ces angles de rotation s'inverse par rapport à d'autres plages d'angles de rotation ou d'autres angles de rotation.

11. Dispositif (31) opératoire suivant l'une des revendications 3 à 10, dans lequel des manipulations opératoires différentes ou des séquences opératoires différentes peuvent être affectées à des fonctions opératoires différentes.

12. Dispositif (31) opératoire suivant la revendication 11, dans lequel des manipulations opératoires ou des séquences opératoires peuvent être conformées et/ou apprises individuellement.

13. Dispositif (31) opératoire suivant l'une des revendications précédentes, dans lequel l'effet de la manipulation opératoire effectuée au moyen de l'actuateur rotatif sur la vitesse d'avance et/ou la vitesse de rotation de la broche peut être prescrit, en fonction d'une fonction pouvant être réalisée par la machine-outil (20).

14. Procédé pour faire fonctionner une machine-outil (20) commandée au moyen d'une commande CNC (30), qui comprend un dispositif (31) opératoire,

dans lequel la machine (20) outil comprend plusieurs axes (X, Y, Z, A, B, C) de machine, au moyen desquels un outil (1) inséré dans un logement (2) d'outil d'une broche (21) à outil est déplacé par rapport à une pièce (5) et/ou tourne autour d'un axe (A) de la broche à outil,
dans lequel le dispositif (31) opératoire a au moins un actuateur (35, 36) rotatif pouvant être opéré manuellement par un opérateur du dispositif (31) opératoire, pouvant tourner sans fin et par lequel une vitesse d'avance, à laquelle l'outil (1) se déplace par rapport à la pièce (5), et/ou une vitesse de rotation de la broche est réglée par l'opérateur manuellement par rotation d'un bouton à tourner de l'actuateur (35, 36) rotatif,
**caractérisé en ce que**
le dispositif (31) opératoire comprend une interface (32) d'opérateur graphique, au moyen de laquelle on règle l'effet d'un traitement opératoire effectué au moyen de l'actuateur rotatif sur la vitesse d'avance et/ou la vitesse de rotation de la broche,
dans lequel on lance un programme, qui est mis à disposition sur la commande CNC et qui prescrit le mouvement de l'outil par rapport à la pièce,
dans lequel une manipulation opératoire, effectuée au moyen de l'actuateur rotatif, modifie conformément au réglage, la vitesse d'avance et/ou la vitesse de rotation de la broche.

15. Commande CNC ayant un dispositif (31) opératoire suivant l'une des revendications 1 à 13.

# FIG 1

# FIG 2

FEED OVR in %

SPINDLE: 70%

FEED: 70%

# FIG 3

FEED
OVR in %

# FIG 4

SPINDLE
OVR in %

# FIG 5

FEED
OVR in %

200

100

K31

K32

M

K33

0

0          360          < in °

# FIG 6

OVR in %

120

K43   100

K41          K42          K44

0

0    90    180    270    360          < in °

FIG 7

FIG 8

# FIG 9

— 40

Betrifft:

GO ☑          Gn ☑          G [ .... ]

Einstellung Kennlinie          Einstellung Drehbereich

[Kennlinie 1 - linear] ☑     [0 — 270°] ☐

[Kennlinie 2 - S-Kurve] ☐     [0 — 360°] ☑

[Kennlinie 3 - Stufen] ☐     [0 — 720°] ☐

# FIG 11

| S1 |
| S2 |
| S3 |
| S4 |
| S5 |
| S6 |

# FIG 10

— 41

GO ☑          Gn ☑          G [ .... ]

Bedeutung "Schnelldrehen links"          Sprung um

☐ 10 %     ☑ 20 %     ☐ -10 %

Bedeutung "Schnelldrehen rechts"          Sprung auf

☐ 50 %          ☑ 100 %

Bedeutung "Rechts Links Rechts"          Umschalten

⋮     ☑ Kennlinie 1          ☐ Kennlinie 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018049450 A2
- EP 3130973 A1
- WO 2019023727 A2